# EUROPEAN PATENT APPLICATION

(11) **EP 3 039 969 A1**
(43) Date of publication of application: **06.07.2016**
(21) Application number: 15151129.2
(22) Date of filing: 14.01.2015
(51) Int. Cl.: A23L 3/3418, A23L 3/3445, A23L 13/00, A23L 13/50, A23B 4/015, A23B 4/09, A23L 3/3454, A23B 4/26, F25B 19/02, A23L 3/32, A23L 3/375

(54) **Apparatus and method for destroying bacteria on a product**

(30) Priority: 11.12.2014 US 201462090624 P
(71) Applicant: Linde Aktiengesellschaft, 80331 München (DE)
(72) Inventor: Newman, Michael D., Hillsborough, NJ New Jersey 08844 (US)
(74) Representative: Hofmann, Andreas

(57) **Abstract**

In order to overcome problems that earlier apparatus and methods have experienced, an apparatus (10; 100) for destroying bacteria, in particular comprising campylobacter, on a product (22), in particular selected from the group consisting of a food product, a carcass, or a combination of food products and carcasses, is proposed, said apparatus (10; 100) comprising:
- an injector (12; 112) having a chamber (26; 126) therein for receiving a cryogenic substance to be provided to the product (22);
- an, in particular first, inlet (28; 128) in communication with the chamber (26; 126) for providing the cryogenic substance to the chamber (26; 126);
- an electrostatic generator (16; 116) in communication with the chamber (26; 126) for charging the cryogenic substance with a first, in particular positive, charge different from a charge of the product (22); and
- an outlet (14; 114) in communication with the chamber (26; 126) and through which the charged cryogenic substance is repulsed to be attracted to the product (22) for adhesion thereto.

A related method of destroying bacteria is also proposed.

## Description

### Technical field of the present invention

The present invention relates to the technical field of destroying bacteria on products, such as for example killing of campylobacter on poultry carcasses; more particularly, the present invention relates to an apparatus and to a method for destroying bacteria, in particular campylobacter, on a product, in particular selected from the group consisting of a food product, a carcass, or a combination of food products and carcasses.

### Technological background of the present invention

The United States Centers for Disease Control and Prevention (CDC) identifies campylobacteriosis as an infectious disease caused by bacteria of the genus campylobacter. Most people who become ill with campylobacter get diarrhea, cramping, abdominal pain, and fever within two to five days after exposure to the organism. The related illness typically lasts about one week, although some infected persons do not exhibit symptoms.

In persons with a compromised immune system, however, campylobacter occasionally spreads to the bloodstream and causes a serious life-threatening infection. The infection with this bacteria or germ is usually associated with eating raw or undercooked poultry meat or from cross-contamination of other foods by these items. Outbreaks of campylobacter have most often been associated with unpasteurized dairy products, contaminated water, poultry and produce.

Prevention of campylobacter infection is known to include cooking for example the food products, such as poultry products, thoroughly. The meat of the poultry is cooked throughout (no longer pink) and any juices are permitted to run clear. All poultry should be cooked to reach a minimum internal temperature of 165°F (73.9°C).

However, heating food products to kill bacteria requires considerable energy expenditure in order to sufficiently neutralize and kill this bacteria in either home or industrial environments. In order for the industry to sell poultry as being fresh, it cannot be cooked or frozen. Liquid nitrogen (LIN) is unique in that it can be applied to the surface of the poultry carcass (where campylobacter live) such that the surface experiences a thermal shock (extreme temperature change in a short duration) This rapid thermal shock is enough to destroy campylobacter.

During the campylobacter treatment process nitrogen liquid is sprayed directly onto the poultry carcasses to provide rapid cooling of the carcass skin or exposed surface area, thereby killing campylobacter. Because of the carcass non-uniform surface area (many recessed and surface areas hidden from direct spray) it has to date been impossible to achieve thorough, effective coverage with conventional spray nozzles.

LIN sprays used will impinge onto the surface of the carcass, making direct contact with the exposed surface area; the remainder of any overspray cascading off of the carcass and collecting on the floor of the tunnel. Only 25 percent of the total flow of the LIN being discharged from the spray nozzles effectively covers the surface of the carcass. The remaining 75 percent of LIN is wasted and therefore must be removed from the tunnel and vaporized. The current process is very inefficient.

### Disclosure of the present invention: object, solution, advantages

Taking the prior art as discussed into account, an object of the present invention is to overcome problems that earlier apparatus and methods have experienced. This object is accomplished by an apparatus comprising the features of claim 1 as well as by a method comprising the features of claim 7. Advantageous embodiments and expedient improvements of the present invention are disclosed in the respective dependent claims.

The present invention basically provides for electrostatics and atomized liquid nitrogen (LIN) for killing of bacteria, in particular campylobacter, on products, in particular on food products, for example on poultry carcasses, such as on chicken carcasses.

More particularly, an apparatus for destroying bacteria on a food product with a cryogenic substance includes an electrostatic generator in communication with for charging the cryogenic substance with a charge opposite to a charge of the food product for the charged cryogenic substance to be attracted to the food product for adhesion thereto. A related method includes repulsing the cryogenic substance to be attracted to the food product for similar adhesion thereto.

Even more particularly, there is provided an apparatus for destroying bacteria on a food product, which includes an injector having a chamber therein for receiving a cryogenic substance to be provided to the food product, said injector in particular including a side wall which may be insulated or vacuum jacketed and/or in particular comprising at least one nozzle; a first inlet in communication with the chamber for providing the cryogenic substance to the chamber; an electrostatic generator in communication with the chamber for charging the cryogenic substance with a first, in particular positive, charge different from a charge of the food product; and an outlet in communication with the chamber and through which the charged cryogenic substance is repulsed to be attracted to the food product for adhesion thereto.

The cryogenic substance may advantageously comprise liquid droplets selected from the group consisting of carbon dioxide (CO₂) droplets and nitrogen (N₂) droplets.

According to an expedient embodiment of the present invention, there may also be provided an apparatus for destroying bacteria on a food product, which includes a second inlet in communication with the chamber for providing a carrier gas to the cryogenic substance in the chamber; in particular, said carrier gas may comprise a gaseous equivalent of the cryogenic substance.

In a favoured embodiment of the present invention, the electrostatic generator may comprise a portion disposed in the chamber, said portion in particular extending from the outlet of the injector and/or comprising a surface area exposed to the cryogenic substance for providing the first charge to said cryogenic substance.

The apparatus may preferably comprise a conveyor for conveying the food product to be proximate to the outlet, said conveyor in particular comprising a conveying apparatus selected from the group consisting of a conveyor belt and transport shackles, for example metallic transport shackles.

There is further provided a method of destroying bacteria on a food product which includes providing a first field having a first, in particular positive, electrical charge; introducing a cryogenic substance into the first field for electrically charging said cryogenic substance, said cryogenic substance in particular comprises droplets of a liquid selected from the group consisting of carbon dioxide (CO₂) droplets and nitrogen (N₂) droplets; providing a second field having a second, in particular negative, electrical charge different from the first electrical charge, or being grounded; repulsing the cryogenic substance from the first electrical field to the second field; and attracting the cryogenic substance with the second field to adhere to the food product.

The repulsing and attracting may advantageously provide a force sufficient for atomizing the cryogenic substance.

According to an expedient embodiment of the present invention, the food product may be conveyed to the second field, in particular by means of a conveying apparatus selected from the group consisting of a conveyor belt and transport shackles, for example metallic transport shackles.

In a favoured embodiment of the present invention, a carrier gas may be provided to the cryogenic substance for carrying the cryogenic substance from the charging to the adhering of the cryogenic substance to the food product; in particular, said carrier gas may comprise a gaseous equivalent of the cryogenic substance.

The method may preferably further comprise
- atomizing the cryogenic substance before introducing said cryogenic substance into the first field, and/or
- producing free, in particular positively charged or negatively charged, ions after electronically charging said cryogenic substance; at least one of said free ions may preferably be attached to the electrically charged cryogenic substance.

Therefore, when a food product, in particular a poultry carcass, for example a chicken carcass, is properly grounded via a conveying apparatus, in particular via a conveyor belt or transport shackles, for example metallic transport shackles, which moves the food product for processing, and the atomized cryogem spray/sprays is/are electrostatically charged, the charged cryogen droplets, which can be discharged as a charged atomized spray or fog, are drawn to and pulled onto a surface of the food product.

This application and action will provide as much as hundred percent coverage of the food product in the cryogen substance and thereby dramatically increase the overall efficiency of freezing the food product to destroy the bacteria, in particular the campylobacter, without wasteful loss of the cryogen.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 7; further improvements, features and advantages of the present invention are explained below in more detail with reference to particular and preferred embodiments by way of nonlimiting example and to the appended drawing figures taken in conjunction with the following description of the embodiments, of which:
FIG. 1 shows a first embodiment of an apparatus for applying cryogen droplets to a food product to destroy bacteria thereon, said embodiment working according to the method of the present invention; and
FIG. 2 shows another embodiment of the apparatus for providing a cryogen spray or fog to the food product to kill the bacteria thereon, said embodiment working according to the method of the present invention.

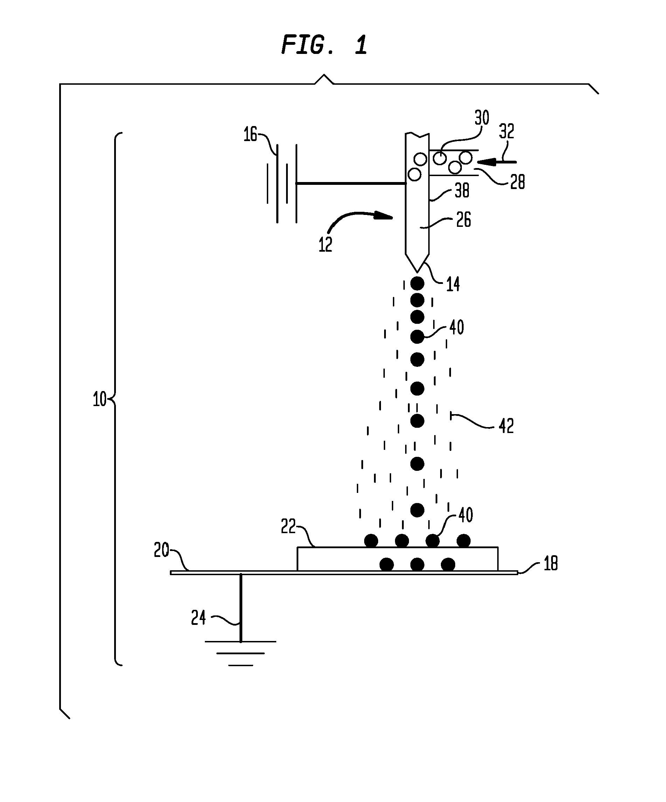

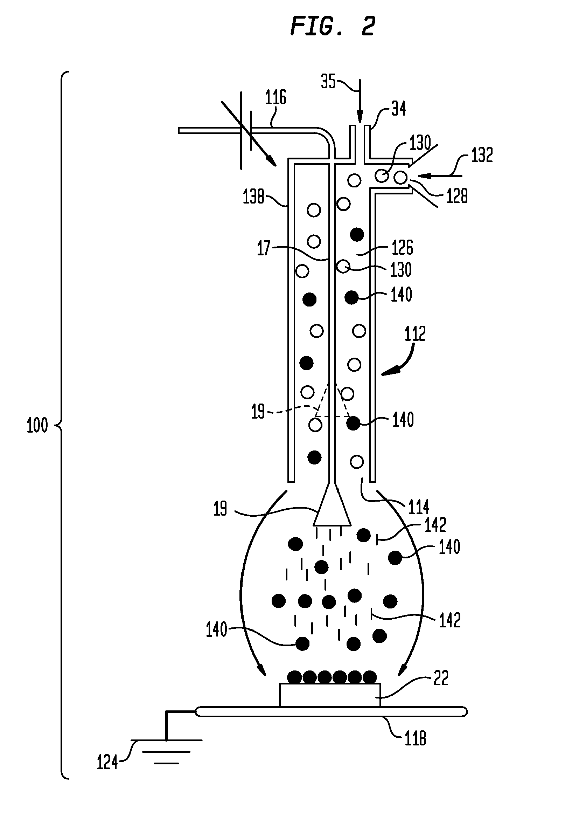

In the appended drawing figures, like equipment is labelled with the same reference numerals throughout the description of FIG. 1 and of FIG. 2.

### Detailed description of the drawings; best way of embodying the present invention

Before explaining the present invention in detail, it is to be understood that the present invention is not limited in its application to the details of construction and arrangement of parts illustrated in the accompanying drawings, since the present invention is capable of other embodiments and of being practiced or carried out in various ways. Also, it is to be understood that phraseology or terminology employed herein is for the purpose of description and not of limitation.

The present embodiments provide an apparatus and method for coating a product, such as for example, a food product, with a cryogen, such as for example a nitrogen (N₂) or carbon dioxide (CO₂) fog using an electrostatic charge. Liquid nitrogen (LIN) may also be used as the initial cryogenic substance.

When, for example, LIN is atomized either by electrostatic atomization or by an ultrasonic fog generator, surfaces of the nitrogen droplets can be charged by exposure to an electrostatic field. The product, and by way of example a food product, can be grounded or given a charge opposite to the LIN and which will attract the atomized nitrogen droplets, thereby allowing for a much greater proportion of the cryogenic spray to be deposited onto the food product, which will maximize the overall bacterial kill rate responsive to the evaporative heat transfer at the food product.

In effect, the opposite charge of the atomized spray and the food product provide for attraction of the spray to the food product to better control the amount of cryogenic spray used, and to be confident that any nitrogen spray used will indeed contact the food product and not be wasted by adhering to or passing through the conveyor belt or other surfaces of the conveyor chamber through which the food product is being transferred for chilling or freezing.

Using a food product, for example, electrostatic atomization exposes the liquid cryogen to an intense electric field between a charged atomizer and a grounded food product. The charge transfers to the liquid cryogen, and repulsive forces between the atomizer and the liquid cryogen force droplets of the cryogen from the atomizer and direct them toward the food product.

Alternatively, the food product can be negatively charged to enhance the attraction of the positively charged cryogen spray to the food product. An energy source for the electrostatic atomization is an electric charge received by the liquid cryogen. Particle size and electrostatic atomization of the liquid cryogen is a function of three (3) factors, that is
(i) electric field strength,
(ii) liquid flow rate, and
(iii) fluid properties (including electrical properties of the fluid).

Referring to FIG. 1 and to FIG. 2, and using nitrogen (N₂) for the cryogenic liquid (LIN) by way of example only, apparatus 10 for generating an electrostactically charged nitrogen fog includes a liquid nitrogen (N₂) injection tube 12 or nozzle, and which may also be referred to herein as an injector. The injector 12 is connected to a DC voltage generator 16.

A conveyor belt 18 is spaced apart from and disposed beneath an outlet 14 of the injector 12, and provides a surface 20 upon which a food product 22, such as a poultry carcass(es) for example, is disposed for transport beneath the injector 12. The conveyor belt 18 is fabricated from metal and may be solid or of the mesh-type. A ground wire 24 is in contact with the conveyor belt 18 to ground said belt, including the belt surface 20, and hence the food product 22.

Another exemplary embodiment in accordance with the present invention is illustrated in FIG. 2. Elements illustrated in FIG. 2 which correspond to the elements described above with respect to FIG. 1 have been designated by corresponding reference numerals increased by 100. The embodiment of FIG. 2 is designed for use in the same manner as the embodiment of FIG. 1, unless otherwise stated.

The injector 12 includes an internal chamber 26 accessible by an inlet 28 or inlet port. Droplets 30 of nitrogen are produced external to the injector 12 and provided to same via the inlet 28 as shown by arrow 32. The injector tube 112 may also include another inlet 34 or inlet port in communication with the chamber 126 so that gaseous nitrogen can be introduced into the chamber as indicated by arrow 35.

The gaseous nitrogen is a carrier gas 35 for the droplets 130. If carbon dioxide (CO₂) is used for the droplets 130 then the carrier gas will instead be CO₂. The carrier gas 35 can also be provided to atomize the droplets 130 introduced into the injector 112 upstream of the outlet 114. The nitrogren droplets 30 introduced through the inlet 28 into the chamber 26 are "un-charged" nitrogen particles.

Upon exposure to the high voltage DC current provided by the DC generator 16, the nitrogen particles receive a charge transfer and become positively charged particles 40. Free ions 42 are also provided upon discharge from the outlet 14. In effect, the injector 12 and a surface area of the internal chamber 26 function as the charging device to charge the droplets.

The DC voltage generator 116 has a portion 17 extending into the internal chamber 126. The portion 17 can be of any length and therefore have any amount of surface area. However, by maximizing the surface area of the portion 17 for exposure to the cryogen droplets this will increase the number of charged particles 140 for adhering to the food product 22.

The injector 12 includes a side wall 38 which may be insulated or vacuum jacketed. The outlet 14 of the injector 12 may be in registration with the food product 22 passing beneath the outlet 14 as further discussed below.

Atomization of the liquid cryogen, such as LIN, can occur in a plurality of ways. Such atomization can occur by
(a) electrostatic atomization wherein the electric field created by the DC generator 16 actually atomizes the liquid nitrogen into droplets to be attracted to the food product 22 (cf. first embodiment according to FIG. 1), or
(b) electrostatic spray charging, wherein the liquid nitrogen can be atomized upstream of for entry into the chamber 126 such that the atomized particles are charged prior to being sprayed from the outlet 114 to be attracted to the grounded food product 22 (cf. second embodiment according to FIG. 2).

Referring to FIG. 2, the nitrogen droplets 130 introduced through the inlet 128 into the chamber 126 are "un-charged" nitrogen particles. Upon exposure to the high voltage DC current provided by the DC generator 116, the nitrogen particles receive a charge transfer and become positively charged particles 140.

Free ions 142 are also provided upon discharge from the outlet 114. The portion 17 of the DC generator 116, in one embodiment, does not have to extend beyond the outlet 114. That is, the portion 17 can terminate as shown generally at 19 within the chamber 126.

Still referring to FIG. 1 and to FIG. 2, because the conveyor belt 18 is grounded, the food product 22 is also grounded. Accordingly, because the food product 22 is disposed closer to the outlet 14 of the injector 12 than is the conveyor belt 18, the positively charged nitrogen particles 40 in an atomized state will first adhere to the food product before adhering to the underlying conveyor belt.

In effect, the food product 22 becomes a magnet for the charged nitrogen particles 40 which are attracted to the food product to adhere to the food product's exterior surface, including entering into crevices and regions of surface inequalities on the food product.

Therefore, a majority of the atomized charged nitrogen particles 40 adhere to the exterior surface of the food product 22 as opposed to the underlying conveyor belt 18. There is therefore less waste of the nitrogen particles and a greater percentage of same is used to kill the bacteria on the food product 22.

Referring to the embodiments of FIG. 1 and of FIG. 2, the injection nozzle 12, 112 and the DC voltage generator 16, 116 including the portion 17, 19 breaks down air at or surrounding the outlet 14, 114 to form the free ions 42, 142.

As a flow of the nitrogen droplets 30, 130 passes through an area where the free ions 42, 142 are being created, the free ions attach to some of the nitrogen droplets thereby charging these droplets. It is also possible to produce either negatively charged or positively charged free ions with the embodiments of FIG. 1 and of FIG. 2.

A further embodiment of the apparatus 10, 100 could have the conveyor belt 18, 118 negatively charged to further enhance the attraction of the charged particles 40, 140 to the food product 22.

The embodiments provide for an efficient use of the atomized cryogen to kill campylobacter. It is also possible to use liquid carbon dioxide (CO₂) instead of LIN nitrogen with the present embodiments.

Alternatively, the poultry carcass can be properly grounded via, in particular metallic, transport shackles instead of a conveyor belt, and the atomized LIN sprays electrostatically charged are attracted to the surface of the poultry carcass providing nearly hundred percent coverage and dramatically increasing the overall efficiency of the freezing and killing processes.

The present embodiments increase overall heat transfer of the treatment process upon the food products, such as for example poultry carcasses, and result in up to 75 percent less in liquid nitrogen (LIN) or CO₂ being used to treat the poultry carcasses to kill the bacteria, while at the same time providing up to hundred percent coverage of the poultry carcass which results in higher kill rates of said bacteria.

Additionally, present embodiments eliminate the need for the freezer processing tunnel to have any cryogen waste disposal apparatus or system, because substantially all, if not all the LIN or CO₂ is used during treatment of the carcasses. This results in an overall cost reduction to operate and maintain the treatment system to kill bacteria on the poultry carcasses.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: apparatus (first embodiment; cf. FIG. 1)
- 12: injector, in particular liquid nitrogen (N₂) injector, for example injection nozzle or injection tube (first embodiment; cf. FIG. 1)
- 14: outlet of injector 12 (first embodiment; cf. FIG. 1)
- 16: electrostatic generator, in particular direct current (DC) voltage generator (first embodiment; cf. FIG. 1)
- 17: portion of electrostatic generator 116 extending into chamber 126 (second embodiment; cf. FIG. 2)
- 18: conveyor, in particular conveyor belt or transport shackles, for example metallic transport shackles (first embodiment; cf. FIG. 1)
- 19: termination of portion 17 within chamber 126 (second embodiment; cf. FIG. 2)
- 20: surface of conveyor 18
- 22: product, in particular food product or carcass, for example poultry carcass, such as chicken carcass
- 24: ground wire (first embodiment; cf. FIG. 1)
- 26: chamber of injector 12 (first embodiment; cf. FIG. 1)
- 28: inlet or inlet port, in particular in communication with chamber 26 (first embodiment; cf. FIG. 1)
- 30: droplet, in particular liquid droplet, for example of nitrogen (N₂) (first embodiment; cf. FIG. 1)
- 32: direction of droplet 30 via inlet or inlet port 28 to injector 12 (first embodiment; cf. FIG. 1)
- 34: further or second inlet or further or second inlet port, in particular in communication with chamber 126 (second embodiment; cf. FIG. 2)
- 35: direction of gaseous cryogenic substance, in particular of carbon dioxide (CO₂) or of gaseous nitrogen (N₂), via further or second inlet or inlet port 34 to injector 112 (second embodiment; cf. FIG. 2)
- 38: sidewall, in particular insulated and/or vacuum jacketed sidewall, of injector 12 (first embodiment; cf. FIG. 1)
- 40: positively charged particle, in particular of nitrogen (N₂) (first embodiment; cf. FIG. 1)
- 42: free ion (first embodiment; cf. FIG. 1)
- 100: apparatus (second embodiment; cf. FIG. 2)
- 112: injector, in particular liquid nitrogen (N₂) injector, for example injection nozzle or injection tube (second embodiment; cf. FIG. 2)
- 114: outlet of injector 112 (second embodiment; cf. FIG. 2)
- 116: electrostatic generator, in particular direct current (DC) voltage generator (second embodiment; cf. FIG. 2)
- 118: conveyor, in particular conveyor belt or transport shackles, for example metallic transport shackles (second embodiment; cf. FIG. 2)
- 124: ground wire (second embodiment; cf. FIG. 2)
- 126: chamber of injector 112 (second embodiment; cf. FIG. 2)
- 128: inlet or inlet port, in particular first inlet or first inlet port, for example in communication with chamber 126 (second embodiment; cf. FIG. 2)
- 130: droplet, in particular liquid droplet, for example of carbon dioxide (CO₂) or of nitrogen (N₂) (second embodiment; cf. FIG. 2)
- 132: direction of droplet 130 via inlet or inlet port 128 to injector 112 (second embodiment; cf. FIG. 2)
- 138: sidewall, in particular insulated and/or vacuum jacketed sidewall, of injector 112 (second embodiment; cf. FIG. 2)
- 140: positively charged particle, in particular of carbon dioxide (CO₂) or of nitrogen (N₂) (second embodiment; cf. FIG. 2)
- 142: free ion (second embodiment; cf. FIG. 2)

## Claims

1. An apparatus (10; 100) for destroying bacteria, in particular comprising campylobacter, on a product (22), in particular selected from the group consisting of a food product, a carcass, or a combination of food products and carcasses, said apparatus (10; 100) comprising:
- an injector (12; 112) having a chamber (26; 126) therein for receiving a cryogenic substance to be provided to the product (22);
- an, in particular first, inlet (28; 128) in communication with the chamber (26; 126) for providing the cryogenic substance to the chamber (26; 126);
- an electrostatic generator (16; 116) in communication with the chamber (26; 126) for charging the cryogenic substance with a first, in particular positive, charge different from a charge of the product (22); and
- an outlet (14; 114) in communication with the chamber (26; 126) and through which the charged cryogenic substance is repulsed to be attracted to the product (22) for adhesion thereto.

2. The apparatus according to claim 1, wherein the cryogenic substance comprises droplets (30; 130) selected from the group consisting of carbon dioxide (CO₂) droplets and nitrogen (N₂) droplets.

3. The apparatus (100) according to claim 1 or 2, wherein the injector (112) further comprises a second inlet (34) in communication with the chamber (126) for providing a carrier gas to the cryogenic substance in the chamber (126), said carrier gas in particular comprising a gaseous equivalent of the cryogenic substance.

4. The apparatus (100) according to at least one of claims 1 to 3, wherein the electrostatic generator (116) comprises a portion (17) disposed in the chamber (126), and in particular extending from the outlet (114), the portion (17) having a surface area exposed to the cryogenic substance for providing the first charge to said cryogenic substance.

5. The apparatus according to at least one of claims 1 to 4, wherein the injector comprises
- a sidewall (38; 138), in particular having insulation thereon, for example being vacuum jacketed, and/or
- at least one nozzle.

6. The apparatus according to at least one of claims 1 to 5, further comprising a conveyor (18; 118) for conveying the product (22) to be proximate to the outlet (14; 114), said conveyor (18; 118) in particular comprising a conveying apparatus selected from the group consisting of a conveyor belt and transport shackles, for example metallic transport shackles.

7. A method of destroying bacteria, in particular comprising campylobacter, on a product (22), in particular selected from the group consisting of a food product, a carcass, or a combination of food products and carcasses, said method comprising:
- providing a first field having a first, in particular positive, electrical charge;
- introducing a cryogenic substance into the first field for electrically charging said cryogenic substance;
- providing a second field
- having a second, in particular negative, electrical charge different from the first electrical charge, or
- being grounded;
- repulsing the cryogenic substance from the first electrical field to the second field; and
- attracting the cryogenic substance with the second field to adhere to the product (22).

8. The method according to claim 7, wherein the repulsing and attracting provide a force sufficient for atomizing the cryogenic substance.

9. The method according to claim 7 or 8, further comprising conveying (18; 118) the product (22) to the second field.

10. The method according to at least one of claims 7 to 9, wherein the cryogenic substance comprises droplets (30; 130) selected from the group consisting of carbon dioxide (CO₂) droplets and nitrogen (N₂) droplets.

11. The method according to at least one of claims 7 to 10, further comprising providing a carrier gas to the cryogenic substance for carrying the cryogenic substance from the charging to the adhering of the cryogenic substance to the product (22), said carrier gas in particular comprising a gaseous equivalent of the cryogenic substance.

12. The method according to at least one of claims 7 to 11, further comprising atomizing the cryogenic substance before introducing said cryogenic substance into the first field.

13. The method according to at least one of claims 7 to 12, further comprising producing free ions after electronically charging said cryogenic substance.

14. The method according to claim 13, further comprising attaching at least one of the free ions to the electrically charged cryogenic substance.

15. The method according to claim 13 or 14, wherein the free ions are positively charged or negatively charged.
